**Europäisches Patentamt**

**European Patent Office**

**Office européen des brevets**

(19)

(11) Veröffentlichungsnummer: **0 163 836**

**B1**

(12)

# EUROPÄISCHE PATENTSCHRIFT

(45) Veröffentlichungstag der Patentschrift:
12.10.88

(21) Anmeldenummer: 85103501.4

(22) Anmeldetag: 25.03.85

(51) Int. Cl.⁴: **B 01 J 2/16**

(54) Verfahren und Vorrichtung zur Herstellung von Granulaten.

(30) Priorität: 07.04.84 DE 3413200
02.03.85 DE 3507376

(43) Veröffentlichungstag der Anmeldung:
11.12.85 Patentblatt 85/50

(45) Bekanntmachung des Hinweises auf die Patenterteilung:
12.10.88 Patentblatt 88/41

(84) Benannte Vertragsstaaten:
AT BE CH DE FR GB IT LI NL

(56) Entgegenhaltungen:
EP-A-0 037 066
BE-A-682 781
FR-A-2 418 669
GB-A-2 063 759

(73) Patentinhaber: BAYER AG, Konzernverwaltung RP Patentabteilung, D-5090 Leverkusen 1 Bayerwerk (DE)

(72) Erfinder: Uhlemann, Hans, Dr., Fontanestrasse 56, D-5650 Solingen (DE)
Erfinder: Braun, Burkhard, Dr., Haferkamp 6, D-5000 Köln 80 (DE)
Erfinder: Hausmann, Heinz, Dr., Dierath 5, D-5653 Leichlingen (DE)
Erfinder: Stopp, Gerhard, Dr., Walter- Flex- Strasse 21, D-5090 Leverkusen 1 (DE)
Erfinder: Karkossa, Horst, Immigrather Strasse 57, D-5653 Leichlingen (DE)

EP 0 163 836 B1

**Beschreibung**

Die vorliegende Erfindung betrifft ein neues Verfahren und eine neue Vorrichtung zur Herstellung von Granulaten.

Es sind bereits zahlreiche Verfahren zur Herstellung von körnigem Gut durch Wirbelschichtgranulation bekannt (vgl. Chem. Ing. Techn. 45, 736 - 739 (1973), DE-A-2 231 445, DE-A-2 555 917 und EP-A-0 087 039). Bei diesen beschriebenen Verfahren, die kontinuierlich durchgeführt werden, wird das anwendungsfertige Granulat in einem Schritt ohne gesonderte Nachtrocknung erhalten. Im wesentlichen lassen sich in diesem Zusammenhang drei verschiedene Methoden unterscheiden, die jedoch alle auf dem gleichen Granulatbildungs-Prozeß basieren. So wird jeweils das zu granulierende Produkt in einer sprühfähigen Konsistenz, also in Form einer Schmelze, einer Suspension oder auch als Lösung, in ein Wirbelbett eingesprüht. Das eingesprühte flüssige Produkt benetzt zunächst die Oberfläche der sich im Wirbelbett befindenden festen Partikel und verfestigt sich danach durch Abtrocknen oder Auskühlen. Auf diese Weise wachsen die Partikel schalenartig, und zwar werden sie umso größer, je länger sie im Wirbelbett verweilen. Daher hängt die Granulatgröße im entscheidenden Maße vom Bettinhalt ab.

Das Wachstum der Partikel beginnt im Wirbelbett mit Keimen, die entweder im Wirbelbett selbst durch nichttreffende, sich verfestigende Sprühtropfen gebildet werden, oder durch Abrieb von schon vorhandenen festen Teilchen erzeugt werden, oder die von außen dem Wirbelbett zugeführt werden. Die im Wirbelbett erfolgende (interne) Keimbildung wird vom Inhalt des Wirbelbettes in der Weise beeinflußt, daß mit wachsendem Bettinhalt einerseits die Zahl der nicht-treffenden Sprühtröpfchen abnimmt und andererseits die Zahl der durch Abrieb erzeugten Keime zunimmt.

Der für die Erzeugung von Granulaten in einer vorgegebenen Korngröße erforderliche Prozeß ist bei der Wirbelbettgranulation das Zusammenspiel von Keimangebot und Granulatwachstum. Der Granulationsprozeß läßt sich daher auf vielfache Weise beeinflussen. So kann z. B. das Keimangebot durch Zugabe von Keimen von außen ergänzt werden.

Gleichbleibende Granulationsbedingungen sind dann gegeben, wenn der Bettinhalt konstant gehalten wird. Im stationären Zustand muß die in das Wirbelbett eingespeiste Feststoffmasse der Masse der dem Bett entnommenen fertigen Granulate entsprechen. Neben dieser Massenbilanz muß aber auch die Partikelbilanz ausgeglichen sein. Es müssen also zahlenmäßig alle dem Wirbelbett entnommenen Granulate durch neue Keime ersetzt werden. Bei den bekannten Methoden wird ein konstanter Granulatbildungsprozeß erzwungen. Die Methoden unterscheiden sich in der Art, in der diese Konstanz erzielt wird.

Im Falle derjenigen Verfahren, die in der DE-A-2 231 445 und in der EP-A-0 087 039 offenbart sind, werden nur intern gebildete Keime verwendet. Die Regelung des zugehörigen geringen wirbelbettinhaltes betätigt nach dem Prinzip einer Füllstandsregelung ein Auslaßorgan und sorgt damit für die Anpassung der Granulatentnahme an die Produkteinspeisung. Das aus dem Granulator austretende Granulat wird gesichtet, und das dabei anfallende Feingut wird in den Granulator zurückgeführt. Da aber bei unterschiedlichen Durchsätzen durch die hintereinandergeschalteten Apparateteile Sichtstrecke und Auslaßorgan die Füllstandsregelung außer Tritt kommt, ist hier nur eine solche Sichtstrecke einsetzbar, deren Gutkorndurchlaß sich ohne Rücksicht auf Trennschärfe dem erforderlichen Durchsatz durch das Auslaßorgan anpaßt. Demgemäß wird bei den in der DE-A-2 231 445 und in der EP-A-0 087 039 beschriebenen Methoden als Sichtstrecke jeweils ein zweites Wirbelbett angewendet. Letzteres klassiert die Granulate nur sehr unscharf. Deshalb ist dieses Verfahren ungeeignet, um Granulate mit einer engen Korngrößenverteilung herzustellen.

Das in der DE-OS-2 263 968 mitgeteilte Granulationsverfahren ist im Prinzip mit der zuvor beschriebenen Methode identisch. Allerdings wird hier als Sichtstrecke anstatt eines zweiten Wirbelbettes ein scharf trennendes Sieb vorgeschlagen. Die notwendige Synchronisation der Durchsätze durch die Sichtstrecke und das Auslaßorgan wird dadurch erreicht, daß man einen Teil des Gutkorns nicht entnimmt, sondern mahlt und dann in das Wirbelbett zurückführt. Dieses zusätzliche Keimangebot muß durch Reduzierung der Keimbildung im Wirbelbett kompensiert werden. Die Reduzierung der Keimbildung im Wirbelbett wird erreicht, indem der Granulator mit einem hohen Bettinhalt betrieben wird. Voraussetzung für diese Betriebsweise ist allerdings ein abriebfestes Granulat. Diese Methode liefert also Granulate mit enger Korngrößenverteilung. Nachteilig ist aber, daß ein vergleichsweise hoher apparativer Aufwand erforderlich ist. Außerdem sind nach dieser Methode lösungsmittelfeuchte oder staubexplosionsgefährliche Produkte nicht zu granulieren, weil die zusätzlich zum Wirbelbettgranulator benötigten Apparate weder inertisiert noch explosionsdruckfest installiert werden können.

Bei der in der DE-A-2 555 917 offenbarten dritten Alternative zur Herstellung von Granulaten nach dem Wirbelschicht-Sprühverfahren wird ein Gegenstrom-Schwerkraft-Sichter als Austragsorgan eingesetzt. Dieser Sichter vereinigt in sich die Funktionen von Sichtstrecke und Austragsorgan.

Mit dieser Vorrichtung werden nur diejenigen Granulate aus dem Wirbelbett entnommen, welche die gewünschte Korngröße erreicht haben. Alle Schwankungen in der Zahl der ausgetragenen Granulate wirken sich unmittelbar auf den Bettinhalt aus. Wenn beispielsweise der Bettinhalt steigt, sind die produzierten Granulate zu klein. Das Wachstum der Granulate muß folglich begünstigt und die Keimzufuhr, die hier von außen erfolgt, gedrosselt werden. Damit die für den Granulationsprozeß zur Verfügung stehenden Keime durch Regelung wirksam beeinflußt werden können, muß die interne Keimbildung minimiert werden, was bei abriebfestem Granulat durch eine Granulation mit hohem Bettinhalt zu erzielen ist. Letztlich liefert diese bekannte Methode Granulate in einer engen Korngrößenverteilung. Nachteilig ist aber, daß sie eine

**0 163 836**

komplizierte geregelte Keimzufuhr von außen erfordert. Ferner ist eine Umstellung des Prozesses von einer bestimmten mittleren Korngröße auf eine andere mittlere Korngröße mit umfangreichen experimentellen Vorarbeiten zur Ermittlung der genauen Einstellparameter verbunden. Dieses gilt in gleicher Weise für die anderen vor stehend beschriebenen Verfahren.

Die Druckschrift DE-G-1 542 527 (und BE-A-682 781) bezieht sich auf ein Verfahren zum kontinuierlichen granulieren von pulverförmigen Feststoffen in einem Fließbett. Es handelt sich bei dieser Druckschrift um eine Agglomeration von Pulvern.

Es wurde nun ein neues Verfahren zur kontinuierlichen Herstellung von Granulaten mit enger Korngrößenverteilung gefunden, wobei das Verfahren darin besteht, daß man

a) das zu granulierende Produkt in flüssiger Form mittels einer Sprühdüse von unten nach oben in ein Wirbelbett einsprüht,

b) die mit dem Abgas aus dem Wirbelbett entweichenden Feingutanteile abscheidet und als Keime für die Granulatbildung in das Wirbelbett zurückführt,

c) allein durch Einstellung des Sichtgasstromes den Granulationsprozeß im Wirbelbett so beeinflußt, daß Granulate in der durch den Sichtgasstrom vorgegebenen Größe entstehen, und

d) das fertige Granulat allein über einen oder mehrere in den Anströmboden der Wirbelbettapparatur eingesetzte Gegenstrom-Schwerkraft-Sichter entnimmt, und

e) gegebenenfalls die so erhaltenen Granulate einer thermischen Nachbehandlung unterwirft.

Weiterhin wurde eine neue Vorrichtung zur kontinuierlichen Herstellung von Granulaten mit enger Korngrößenverteilung gefunden. Die Vorrichtung besteht im wesentlichen aus einem Wirbelschichtgranulator,

- der Einrichtungen zur Verdüsung von unten nach oben des in einer sprühfähigen Form zugeführten Produkts enthält,
- der ferner ein zur Rückführung von den aus dem Wirbelbett entweichenden Feingutanteilen geeignetes System enthält und
- an dessen Anströmboden unmittelbar einer oder mehrere Gegenstrom-Schwerkraft-Sichter angebracht sind.

Schließlich wurden neue, nach dem erfindungsgemäßen Verfahren hergestellte Granulate gefunden,

- die 1 bis 100 Gewichtsprozent an mindestens einer aktiven Komponente, 0 bis 99 Gewichtsprozent an inertem Füllmaterial und 0 bis 40 Gewichtsprozent an Dispergier- und/oder Bindemittel sowie gegebenenfalls Zusatzstoffe enthalten,
- die eine mittlere Korngröße von 0,1 bis 3 mm aufweisen,
- die eine enge Korngrößenverteilung aufweisen, wobei der größte und der kleinste Partikeldurchmesser um maximal eine halbe mittlere Korngröße vom Mittelwert abweichen,
- die einheitlich geformt und homogen aufgebaut sind und eine kompakte, mikroporöse Struktur aufweisen und
- spontan in Wasser oder anderen Lösungsmitteln dispergierbar bzw. löslich sind.

Das erfindungsgemäße Verfahren unterscheidet sich von allen entsprechenden vorbekannten Verfahren dadurch, daß der Granulatbildungsprozeß sich im Wechselspiel zwischen Granulatwachstum und Keimbildung selbsttätig auf die durch die Sichtgaszufuhr vorgegebene Größe der ausgetragenen Granulate einstellt.

Das erfindungsgemäße Verfahren zeichnet sich gegenüber den analogen vorbekannten Methoden durch eine Reihe von Vorteilen aus. So lassen sich Granulate der jeweils gewünschten Partikelgröße herstellen, wobei der Teilchen durchmesser (Kornspektrum) innerhalb sehr enger Grenzen liegt. Ferner kann die Größe der Partikel mit Hilfe der Sichtgaszufuhr in einfacher Weise von Fall zu Fall variiert werden; apparative Änderungen sind dazu nicht erforderlich. Vielmehr kann eine Änderung der Partikelgröße sogar bei laufendem Betrieb erreicht werden.

Von besonderem Vorteil ist, daß nur Gutkorn entsteht, also Granulate der gewünschten Dimension. Materialverluste treten nicht auf, da Unterkorn - also zu kleine Teilchen - so lange im Wirbelbett verbleiben, bis sie die gewünschte Größe erreicht haben. Überkorn - also zu große Partikel - wird ebenfalls nicht gebildet, weil die Teilchen durch ständiges Sichten aus dem Wirbelbett ausgetragen werden. Mahlprozesse und Siebvorgänge entfallen daher vollständig. Auch die Zugabe von Fremdkeimen zur Beeinflussung des Prozesses ist nicht notig. Günstig ist auch, daß die bei dem erfindungsgemäßen Verfahren in das Wirbelbett einzusprühenden flüssigen Produkte einen sehr hohen Feststoffgehalt aufweisen können. Die entstehenden Granulate sind einheitlich geformt, homogen aufgebaut und lassen sich trotz hoher Festigkeit spontan in Wasser oder anderen Lösungsmitteln dispergieren oder lösen. Da der Prozeß geringe Anforderungen an die Abriebfestigkeit der Granulate stellt, können auch Granulate mit geringem Bindemittelgehalt hergestellt werden, was deren Dispergierverhalten begünstigt. Schließlich lassen sich nach dem erfindungsgemäßen Verfahren auch lösungsmittelfeuchte und staubexplosionsgefährliche Produkte verarbeiten, weil die benötigte Vorrichtung inertisiert und explosionsdruckfest ausgeführt werden kann.

Bei dem erfindungsgemäßen Verfahren wird das zu granulierende Produkt in flüssiger Form in ein Wirbelbett

3

eingesprüht. Dabei kann die Flüssigkeit eine Schmelze, eine Lösung oder eine Suspension (Slurry) sein.

Die einzusprühende Flüssigkeit kann eine oder auch mehrere aktive Komponenten enthalten. Als aktive Komponenten kommen sowohl Substanzen infrage, die bei Raumtemperatur fest sind als auch solche, die bei Raumtemperatur flüssig sind. Voraussetzung für die Verwendung flüssiger aktiver Komponenten ist lediglich, daß sie vor der Granulierung auf feste Trägerstoffe aufgezogen werden. Die aktiven Komponenten können in Wasser löslich oder unlöslich sein. Sie müssen soweit gegen Hydrolyse stabil sein, daß sie während der Durchführung des erfindungsgemäßen Verfahrens und während der Anwendung der resultierenden Granulate in Gegenwart von Wasser keine nennenswerte Zersetzung erleiden.

Als aktive Komponenten kommen agrochemische Wirkstoffe, Wirkstoffe zur Bekämpfung von Schädlingen im Haushalts und Hygienebereich, pharmakologisch wirksame Stoffe, Nährstoffe, Süßstoffe, Farbstoffe und organische oder anorganische Chemikalien in Betracht.

Unter agrochemischen Stoffen sind im vorliegenden Fall üblicherweise im Pflanzenschutz verwendbare Wirkstoffe zu verstehen. Hierzu gehören vorzugsweise Insektizide, Akarizide, Nematizide, Fungizide, Herbizide, Wachstumsregulatoren und Düngemittel. Als Beispiele für derartige Wirkstoffe seien im einzelnen genannt:

0,0-Diethyl-0-(4-nitrophenyl)-thionophosphorsäureester, 0-0-Diemthyl-0-(4-nitrophenyl)-thionophosphorsäureester, 0-Ethyl-0-(4-methylthio)-phenyl)-S-propyldithiophosphat, (0,0-Diethylthionophosphoryl)-α-oxomino-phenylessigsäurenitril, 2-Isopropoxyphenyl-N-methylcarbamat, Propionsäure-3,4-dichloranilid, 3-(3,4-Dichlorphenyl)-1,1-dimethylharnstoff, 3-(4-Chlorphenyl)-1,1-dimethylharnstoff, N-(2-Benzthiazolyl)-N,N'-dimethylharnstoff, 3-(3-Chlor-4-methylphenyl)-1,1-dimethylharnstoff, 3-(4-Isopropyphenyl)-1,1-dimethylharnstoff, 4-Amino-6-(1,1-dimethylethyl)-3-methylthio-1,2,4- triazin-5-(4H)-on, 4-Amino-6-(1,1-dimethylethyl)-3-ethylthio-1,2,4-triazin-5-(4H)-on, 1-Amino-6-ethylthio-3-(2,2-dimethylpropyl)-1,3,5-triazin-2,4-(1H, 3H)-dion, 4-Amino-3-methyl-6-phenyl-1,2,4-triazin-5-(4H)-on; 2-Chlor-4-ethylamino-6-isopropylamino-1,3,5-triazin, das R-Enantiomere des 2-[4-(3,5-Dichlorpyridyl-2-oxy)-phenoxy]-propionsäure-(trimethylsilyl)-methylesters, das R-Enantiomere des 2-[4-(3,5-Dichlorpyridyl-2-oxy)-phenoxy]-propionsäure-(2-benzyloxy)-ethylesters, 2,4-Dichlorphenoxyessigsäure, 2-(2,4-Dichlorphenoxy)-propionsäure, 4-Chlor-2-methylphenoxyessigsäure, 2-(2-Methyl-3-chlorphenoxy)-propionsäure, 3,5-Dijod-4-hydroxybenzonitril, 3,5-Dibrom-4-hydroxybenzonitril sowie Diphenylether und Phenylpyridazine, wie z. B. Pyridate, ferner 2,3-Dihydro-2,2-dimethyl-7-benzofuranyl-N-methylcarbamat, 3,5-Dimethyl-4-methylthiophenyl-N-methylcarbamat, 0,0-Diethyl-0-(3-chlor-4-methyl-7-cumarinyl)-thiophosphat), N,N-Dimethyl-N'-(fluordichlormethylmercapto)-N'-(4-methylphenyl)-sulfamid, 1-(4-Chlorphenoxy)-3,3-dimethyl-1-(1,2,4-triazol-1-yl)-butan-2-on, 1-(4-Chlorphenoxy)-3,3-dimethyl-1-(1,2,4-triazol-1-yl)-butan-2-ol, 1-Cyclohexyl-4,4-dimethyl-3-hydroxy-2-(1,2,4-triazol-1-yl)-pent-1-en, 2-(2-Furyl)-benzimidazol, 5-Amino-1-bis-(dimethylamido)-phosphoryl-3-phenyl-1,2,4-triazol, 4-Hydroxy-3-(1,2,3,4-tetrahydro-1-naphthyl)-cumarin, S[1,2-Bis-(ethoxycarbonyl)-ethyl]-0,0-dimethyldithiophosphorsäureester, 0,0-Dimethyl-0-(4-methylmercapto-3-methylphenyl)-thionophosphorsäureester, 0-Ethyl-0-(2-isopropyloxycarbonylphenyl)-N-isopropylthionophosphorsäureester-amid und (S)-α-Cyano-3-phenoxybenzyl-(1R)-cis-3-(2,2-dibromvinyl)-2,2-dimethylcyclopropancarboxyalt.

Unter Wirkstoffen zur Bekämpfung von Schädlingen im Haushalts- und Hygiene-Bereich sind im vorliegenden Fall üblicherweise für derartige Zwecke einsetzbare Stoffe zu verstehen. Als Beispiele seien genannt:

2-Isopropoxyphenyl-N-methylcarbamat, 0,0-Diethyl-0-(4-nitrophenyl)-thionophosphorsäureester, 0,0-Dimethyl-0-(4-nitrophenyl)-thionophosphorsäureester, S-[1,2-Bis-(ethoxycarbonyl)-ethyl]-0,0-dimethyldithiophosphorsäureester, 0,0-Dimethyl-0-(3-methyl-4-nitrophenyl)-thionophosphorsäureester, 0,0-Dimethyl-0-(4-methylmercapto-3-methylphenyl)-thionophosphorsäureester, (Cyclohex-1-en-1,2-dicarboximidomethyl)-2,2-dimethyl-3-(2-methylpropenyl)-cyclopropancarboxylat.

Unter pharmakologisch wirksamen Stoffen sind im vorliegenden Fall sowohl im veterinärmedizinischen als auch im humanmedizinischen Bereich einsetzbare Stoffe zu verstehen. Als Beispiel für einen veterinärmedizinisch verwendbaren Stoff sei 2,2-Dimethyl-3-[β-(p-chlorphenyl)-β-chlorvinyl]-cyclopropancarbonsäure-α-cyano-3-phenoxy-4-fluorbenzylester genannt. Als Beispiel für einen im humanmedizinischen Bereich verwendbaren Stoff sei Acetylsalicylsäure genannt.

Als Nährstoffe können sowohl Stoffe für die menschliche als auch Stoffe für die tierische Nahrung eingesetzt werden. Als Beispiele seien genannt: Zitronensäure, Vitamine, Kaffepulver, Teepulver und Kakaopulver.

Als Beispiele für Süßstoffe seien Natriumcyclamat und Saccharin genannt.

Unter Farbstoffen sind im vorliegenden Fall zur Herstellung von Farbstoffdispersionen bzw. Farbstofflösungen geeignete Stoffe zu verstehen, die als Färbemittel und/oder Anstrichstoffe Verwendung finden. So können wasserlösliche Farbstoffe, wie anionische, kationische und reaktive Farbstoffe, oder auch wasserunlösliche Farbstoffe, wie Küpenfarbstoffe, Polyesterfarbstoffe und Pigmentfarbstoffe, eingesetzt werden. Als Beispiele seien genannt:

Indanthrenfarbstoffe, Cerofixfarbstoffe, Astrazonfarbstoffe, Triarylaminfarbstoffe, Triarylmethanfarbstoffe, Methinfarbstoffe, Anthrachinonfarbstoffe, Indigofarbstoffe, Schwefelfarbstoffe, Azofarbstoffe und Pigmentfarbstoffe.

Als organische bzw. anorganische Chemikalien kommen solche Stoffe infrage, die vorzugsweise in Form von wäßrigen Dispersionen für synthetische Zwecke verwendet werden. Ferner können auch wäßrige Zeolithsuspensionen eingesetzt werden. Unter Zeolithen sind hierbei Stoffe dieses Typs zu verstehen, wie sie in Ullmann, 4. Aufl., Band 17, Seite 9 ff unter dem Stichwort "Molekularsiebe" beschrieben werden.

Verwendbar sind außerdem auch Suspensionen von anorganischen Oxiden, die zur Herstellung von Katalysatoren bzw. Katalysatorträgern geeignet sind. Beispielhaft genannt seien hierbei Aluminiumoxid und Siliziumdioxid.

Das bei der Durchführung des erfindungsgemäßen Verfahrens in das Wirbelbett einzusprühende flüssige Produkt kann neben den aktiven Komponenten und dem gegebenenfalls vorhandenen flüssigen Verdünnungsmittel auch inerte Füllmaterialien, Dispergiermittel, Bindemittel und/oder Zusatzstoffe, wie zum Beispiel Konservierungsmittel und Farbstoffe, enthalten.

Als Füllmaterialien kommen alle üblicherweise in wasserdispergierbaren bzw. wasserlöslichen Granulaten bzw. öllöslichen Granulaten verwendbaren Füll- und Trägerstoffe in Betracht. Vorzugsweise verwendbare derartige Stoffe sind anorganische Salze, wie Alkalimetall-, Magnesium- und Ammoniumchloride und -sulfate, z. B. Magnesiumsulfat, Kaliumsulfat, Natriumsulfat, Kaliumchlorid, Ammoniumsulfat, Lithiumsulfat und Ammoniumchlorid, ferner Oxide, wie Magnesiumoxid, Nitrate, Carbonate, Hydrogencarbonate, Silikate, Talkum, Kreide, Quarzmehl, Kaolin, Montmorillonit, Bentonit, Attapulgit und Sepiolith, außerdem Graphit, ferner Harnstoff und Harnstoff-Derivate, wie Hexamethylentetramin und Casein, weiterhin Kohlehydrate, wie Stärke, Zucker, Alginate und deren Derivate, Getreidemehle, wie Weizenmehl und Reismehl, außerdem Kelzane, Methylcellulose und Hydroxypropyl-methylcellulose, sowie schließlich wasserlösliche Polymere, wie Polyvinylalkohol und Polyvinylpyrrolidon.

Als Dispergiermittel kommen vorzugsweise infrage:
Kondensationsprodukte aus aromatischen Sulfonsäuren und Formaldehyd, wie Kondensationsprodukte aus sulfoniertem Ditolylether und Formaldehyd, ferner Ligninsulfonsäure Salze, wie Lithium-, Natrium-, Kalium-, Magnesium- Calcium- und Ammonium-Salze der Ligninsulfonsäure, ferner Methylcellulose, Polyoxyethylen-Fettsäureester, Polyoxyethylen-Fettalkoholether, z. B. Alkylarylpolyglykolether, Alkylsulfonate und Eiweißhydrolysate.

Auch Dispergiermittel selbst können aus ihren Lösungen zu schnell wieder auf lösbaren Granulaten verarbeitet werden.

Weiterhin können Slurries von anionaktiven Waschmitteln, gegebenenfalls in Gegenwart von Zusätzen nichtionischer Tenside, Buildern, optischer Aufheller, von Weichmachern und/oder von Duftstoffen, verarbeitet werden.

Als Bindemittel kommen alle in wasserdispergierbaren bzw. wasserlöslichen Granulaten bzw. in öldispergierbaren und öllöslichen Granulaten üblicherweise vorhandenen Bindemittel (Kleber) in Betracht. Vorzugsweise verwendbar sind Lösungen, Emulsionen oder Latices von natürlichen oder synthetischen Stoffen, wie Methylcellulose, Dextrin, Zucker, Stärke, Alginate, Glykole, Polyvinylpyrrolidon, Ligninsulfonat, Gummiarabicum, Polyvinylalkohol und Polyvinylacetat, in Wasser oder niedrig siedenden organischen Solventien, wie Methanol, Ethanol, Butanol und Methylenchlorid. In manchen Fällen kommen auch Wasserglas und Kieselsol in Frage.

Beispiele für Konservierungsmittel, die bei der Durchführung des erfindungsgemäßen Verfahrens in den zu versprühenden flüssigen Produkten enthalten sein können, sind 2-Hydroxybiphenyl, Sorbinsäure, p-Hydroxybenzaldehyd, p-Hydroxybenzoesäuremethylester, Benzaldehyd, Benzoesäure und p-Hydroxybenzoesäurepropylester. Als Farbstoffe, die auch als Zusatzstoffe infrage kommen, seien anorganische Pigmente, wie Eisenoxid, Titandioxid und Ferrocyanblau, und organische Farbstoffe, wie Alizarin-, Azo- und Metallphthalocyaninfarbstoffe genannt.

Wenn bei der Durchführung des erfindungsgemäßen Verfahrens aktive Komponenten und Bindemittel eingesetzt werden, die bei Raumtemperatur als Feststoffe vorliegen, so ist es erforderlich, diese aktiven Komponenten bzw. Bindemittel in Form einer Schmelze einer Lösung oder einer Suspension in das Wirbelbett einzubringen. Zur Herstellung von Lösungen oder Suspensionen derartiger aktiver Komponenten bzw. Bindemittel kommen alle üblichen inerten organischen Solventien sowie Wasser in Betracht. Als organische Lösungsmittel sind hierbei vorzugsweise verwendbar Alkohole, wie Ethanol und Glykol, ferner aliphatische und aromatische, gegebenenfalls halogenierte Kohlenwasserstoffe, wie Ligroin, Hexan, Benzin, Benzol, Toluol, Xylol, Methylenchlorid, Tetrachlorkohlenstoff und Chlorbenzol, außerdem Ether, wie Dioxan, Tetrahydrofuran und Anisol, weiterhin Ketone, wie Aceton, Methylethylketon und Cyclohexanon, darüberhinaus stark polare Solventien, wie Hexamethylphosphorsäuretriamid, Acetonitril, Dimethylformamid und Dimethylsulfoxid. Besonders bevorzugt ist die Verwendung von Wasser.

In den flüssigen Produkten, die bei der Durchführung des erfindungsgemäßen Verfahrens in das Wirbelbett eingesprüht werden, kann der Feststoffgehalt innerhalb eines größeren Bereiches variiert werden. Im allgemeinen liegt der Feststoffgehalt beim Einsatz von Suspensionen (Slurries) zwischen 5 und 75 Gewichtsprozent, vorzugsweise zwischen 10 und 65 Gewichtsprozent.

Die zu versprühenden flüssigen Produkte werden nach üblichen Methoden durch Vermischen der Bestandteile in den gewünschten Mengenverhältnissen und gegebenenfalls durch anschließendes Erwärmen der resultierenden Mischungen hergestellt.

Die Granulation kann in Luft oder inerten Gasen, wie beispielsweise Stickstoff durchgeführt werden. Nach dem erfindungsgemäßen Verfahren kann die Granulation in einer Wirbelbettapparatur angefahren werden, in der bereits Startgranulat enthalten ist. Es ist jedoch auch möglich, die Granulation in einer leeren Apparatur zu starten. In diesem Fall beginnt die erfindungsgemäße Wirbelbettgranulation als Sprühtrocknung. Sie führt dann durch allmählichen Aufbau des Wirbelbettes zu einer Bettfüllung, bei der die Granulate die gewünschte Größe erreichen und ausgetragen werden. Setzt man Produkte ein, die zu einer Belagbildung auf den Wänden der Apparatur neigen, so wird beim Anfahren des Prozesses zweckmäßigerweise Startgranulat vorgelegt. Durch diese Maßnahme wird ein mögliches Ansprühen der Wände weitgehend vermieden.

Das zu granulierende flüssige Produkt wird bei der Durchführung des erfindungsgemäßen Verfahrens durch Sprühdüsen in das Wirbelbett eingebracht Besonders vorteilhaft ist dabei die Verwendung von Zweistoff-Düsen.

Als Zerstäubungsgas kann jedes unter den Arbeitsbedingungen inerte Gas verwendet werden. Vorzugsweise einsetzbar sind Luft oder Inertgase, wie z. B. Stickstoff. Die Menge an Zerstäubungsgas kann innerhalb eines größeren Bereiches variiert werden, sie richtet sich im allgemeinen nach den Apparate-Dimensionen und nach Art und Menge des einzusprühenden Produktes. Im allgemeinen arbeitet man mit Zerstäubungsgas-Mengen, bezogen auf das eingesetzte Produkt, von 0,1 kg Gas/ kg Speise bis 10 kg Gas/ kg Speise, vorzugsweise von 0,5 kg Gas/kg Speise bis 5 kg Gas/kg Speise. Die Temperatur des Zerstäubungsgas-Stromes kann ebenfalls innerhalb eines größeren Bereiches variiert werden. Im allgemeinen arbeitet man bei Zerstäubungsgas-Temperaturen zwischen 0°C und 250°C, vorzugsweise zwischen 20°C und 200°C.

Die mit dem Abgas aus dem Wirbelbett entweichenden Feingutanteile werden abgeschieden und als Keime für die Granulatbildung in das Wirbelbett zurückgeführt. Dabei ist sowohl eine interne als auch eine externe Feingutrückführung möglich. Bei der internen Feingutrückführung wird der Staub an einem unmittelbar auf das Wirbelbett aufgesetzten Filter abgeschieden und mit Hilfe von Abreinigungsimpulsen in das Wirbelbett zurückbefördert. Bei der externen Feingutrückführung wird der Staub außerhalb des Granulators aus dem Abgas abgeschieden. Zur Abscheidung der entweichenden Feingutanteile können alle üblicherweise für derartige Zwecke eingesetzten Apparate verwendet wenden. In einer besonders bevorzugten Ausführung erfolgt die Abscheidung des Feingutes mit Hilfe eines Zyklons oder eines Staubfilters. Das abgeschiedene Feingut wird in die Sprühzone des Wirbelbettes zurückgefördert. Diese Rückförderung erfolgt vorzugsweise pneumatisch. Als Treibgase können dabei alle üblichen, unter den Arbeitsbedingungen inerten Gase verwendet werden. Vorzugsweise verwendbar sind Luft und Inertgase, wie z. B. Stickstoff. Die Menge an Treibgas kann innerhalb eines größeren Bereiches variiert werden; sie richtet sich im allgemeinen nach den Apparate-Dimensionen und der entweichenden Feingutmenge. Im allgemeinen arbeitet man mit Treibgas-Mengen von 0,01 kg Gas pro kg Feingut bis 2 kg Gas pro kg Feingut, vorzugsweise von 0,1 bis 1 kg Gas pro kg Feingut. Die Temperatur des Treibgas-Stromes kann ebenfalls innerhalb eines größeren Bereiches variiert werden. Im allgemeinen arbeitet man bei Temperaturen zwischen 20°C und 350°C, vorzugsweise zwischen 30°C und 300°C.

Der Granulationsprozeß im Wirbelbett wird bei dem erfindungsgemäßen Verfahren allein durch die eingesprühte Dosis an dem zu granulierenden flüssigen Produkt und die Stärke des Sichtgasstromes aufrechterhalten. Von außen werden keine zusätzlichen Keime zugeführt. Als Sichtgase können dabei alle üblichen, unter den Arbeitsbedingungen inerten Gase verwendet werden. Vorzugsweise einsetzbar sind Luft und Inertgase, wie z. B. Stickstoff. Die Sichtgasmenge kann innerhalb eines größeren Bereiches variiert werden; sie richtet sich nach den Apparate-Dimensionen und der Korngröße und dem Massenstrom der auszutragenden Granulate. Im allgemeinen arbeitet man mit Sichtgasmengen zwischen 0,2 kg Gas pro kg Granulat und 5 kg Gas pro kg Granulat, vorzugsweise zwischen 0,4 und 2 kg Gas pro kg Granulat. Die Temperatur des Sichtgasstromes kann ebenfalls innerhalb eines größeren Bereiches variiert werden. Im allgemeinen arbeitet man bei Sichtgas-Temperaturen zwischen 20°C und 350°C, vorzugsweise zwischen 30°C und 300°C.

Die Sichtgasgeschwindigkeit richtet sich nach Korngröße und Dichte des auszutragenden Granulates. Im allgemeinen arbeitet man bei Sichtgasgeschwindigkeiten zwischen 0,5 und 15 m/sec, vorzugsweise zwischen 1 und 5 m/sec.

Das fertige Granulat wird bei der Durchführung des erfindungsgemäßen Verfahrens über einen oder mehrere Gegenstrom-Schwerkraft-Sichter ausgetragen. Als derartige Austragsorgane kommen alle üblichen Sichter in Betracht, die nach dem Prinzip der Gegenstrom-Schwerkraft-Sichtung arbeiten. Wenn eine besonders enge Kornverteilung gewünscht ist, wird als spezielle Ausführungsform ein Zick-Zack-Sichter verwendet. Um die Sichtgasmenge aus energetischen Gründen so klein wie möglich zu halten, wird bei der Durchführung des erfindungsgemäßen Verfahrens vorzugsweise ein Sichter mit Zick-Zack-Profil ( = Zick-Zack-Sichter) eingesetzt, bei dem sich die Spaltlänge und damit der Sichterquerschnitt durch kammartig miteinander verbundene, dem Zick-Zack-Profil angepaßte und senkrecht zur Sichterachse verschiebbare Stege einstellen läßt. In einer bevorzugten Ausführung ist dabei eine Verstelleinrichtung für die Stege enthalten, die mit einer Regelvorrichtung verbunden ist, welche den Sichtgasstrom in der Weise nachregelt, daß die Strömungsgeschwindigkeit im Sichter trotz des veränderlichen Querschnittes konstant bleibt.

Das erfindungsgemäße Verfahren wird im allgemeinen unter Atmosphärendruck durchgeführt. Es ist aber auch möglich, unter erhöhtem oder vermindertem Druck zu arbeiten. Am Ausgang des Gegenstrom-Schwerkraftsichters arbeitet man im allgemeinen unter Atmosphärendruck. Um dieses zu erreichen, ist zwischen dem Abluftventilator und dem Ausgang am Sichter ein den Abluftventilator oder eine Drosselklappe oder eine analoge Vorrichtung nachstellender Druckregler geschaltet, der den Druck am Sichterausgang stets dem Umgebungsdruck angleicht. Herrscht am Sichterausgang kein Atmosphärendruck, so ist der Einbau von Schleusen zur Aufrechterhaltung des gewünschten Druckes erforderlich.

Zur Veranschaulichung des Ablaufs des erfindungsgemäßen Verfahrens und der dazu benötigten Vorrichtung die beigefügten Zeichnungen. Darin zeigt

0 163 836

Fig. 1 ein Diagramm zur Erläuterung des Wechselspiels zwischen Granulatwachstum und Keimbildung ohne Berücksichtigung des Abriebs,

Fig. 2 ein Diagramm zur Erläuterung des Wechselspiels zwischen Granulatwachstum und Keimbildung unter Berücksichtigung des Abriebs,

Fig. 3 eine schematische Darstellung der gesamten erfindungsgemäßen Vorrichtung in der Ausführung mit interner Feingutrückführung,

Fig. 4 eine perspektivische Darstellung des am Austrag der Wirbelbettapparatur befindlichen Zick-Zack-Sichters,

Fig. 5 einen Querschnitt durch den Zick-Zack-Sichter

Fig. 6 die Verstelleinrichtung am Zick-Zack-Sichter zur Einstellung des Austragsquerschnittes,

Fig. 7 die am Sichterausgang erzielte Korngrößenverteilung, die bei denjenigen Granulaten ermittelt wurde, deren Herstellung in den Beispielen 1 bis 3 beschrieben ist und

Fig. 8 einen Querschnitt durch eine Zweistoff-Düse, die während des Betriebes auswechselbar ist.

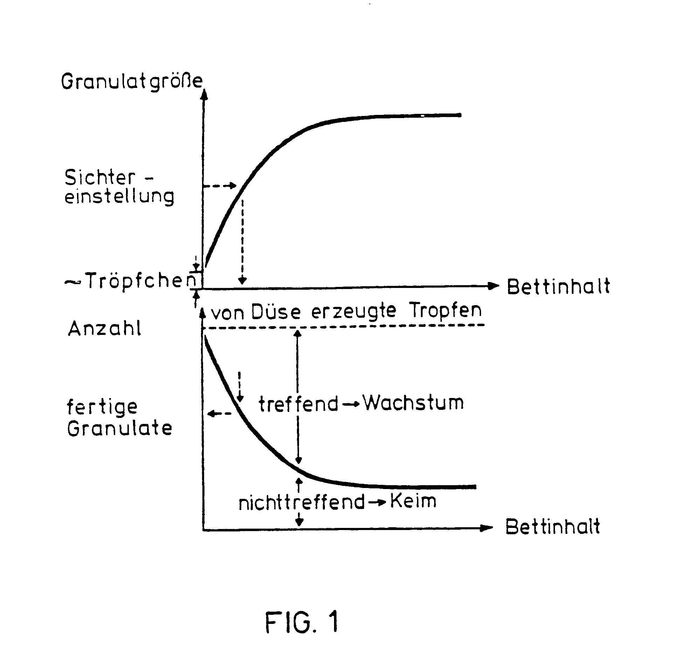

Die in Fig. 1 dargestellte Abhängigkeit der Größe und der Anzahl der Granulat-Partikel vom Inhalt des Wirbelbettes entspricht den Verhältnissen, die bei der Herstellung eines vollständig abriebfesten produktes zu erwarten sind.

Die von der Düse erzeugten Tröpfchen treffen zum Teil auf die im Wirbelbett zirkulierenden Partikel und führen damit zu deren Wachstum. Die nicht-treffenden Töpfchen verfestigen sich. Sie erstarren, wenn es sich um eine Schmelze handelt; sie trocknen im Falle einer Suspension ab; und sie kristallisieren in kleinen Partikeln aus, wenn eine Lösung versprüht wird. Sie werden aus dem Abgas abgeschieden und in die Sprühzone des Wirbelbettes zurückgeführt. Damit werden sie zu neuen Keimen, an die sich weitere Partikel anlagern können. Mit zunehmendem Bettinhalt (der Start entspricht der Sprühtrocknung) wird das Wachstum der Partikel zu Lasten der Keimbildung begünstigt. Die Größe der ausgetragenen Granulate hängt im stationären Zustand unmittelbar von der Zahl der gebildeten Keime ab, denn es müssen ebenso viele Fertiggranulate ausgetragen werden wie Keime entstehen. Auf die Zahl der Fertiggranulate muß sich die zugespeiste Trockenmasse verteilen. Damit ist die Größe der Granulate vorgegeben, wobei hier zur Vereinfachung unter der Größe der Granulate die Masse eines Granulatkornes zu verstehen ist.

Mit einer hohen Keimzahl und entsprechend geringem Bettinhalt können daher viele kleine Granulate erzeugt werden - was in Fig. 1 der oberen Graphik dargestellt ist - während bei hohem Bettinhalt unter sonst gleichen Bedingun gen wenige große Granulate entstehen. Wird nun die Sollgröße der Fertiggranulate durch die Einstellung des sichtenden Austrages festgelegt, so gehört dazu über die erwähnten Zusammenhänge - wie in Fig. 1 eingezeichnet - im stationären Zustand ein Bettinhalt, der gerade die zugehörige Keimzahl liefert. Dieser Bettinhalt stellt sich ohne äußere Eingriffe selbständig ein.

Bei dieser Betrachtung ist ein weiterer Effekt, der zur Keimbildung beiträgt bewußt vernachlässigt, nämlich der trieb. Durch den Abrieb, der stark produktabhängig ist, werden die Verhältnisse etwas verwickelter.

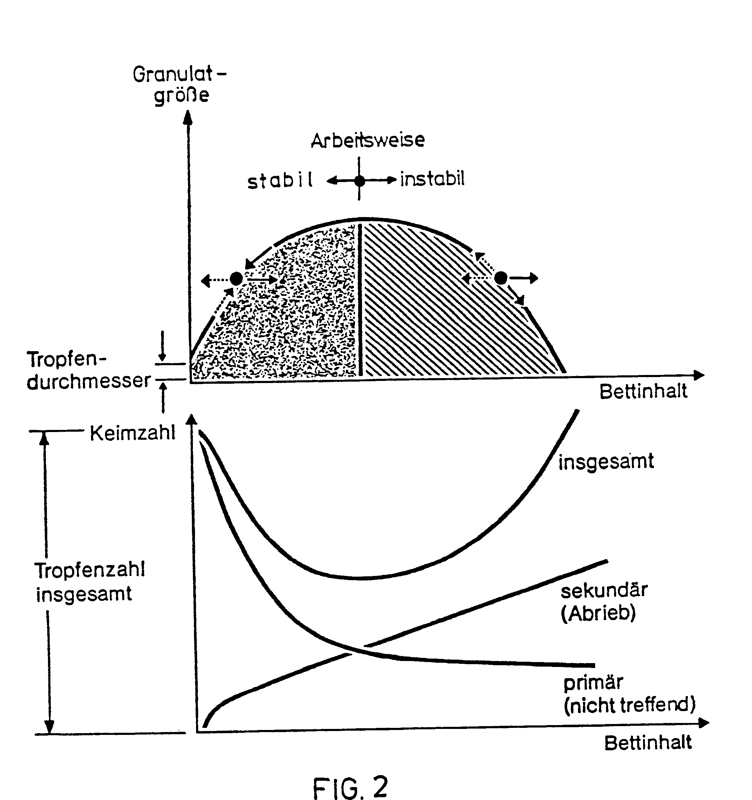

Im Gegensatz zu den bisher betrachteten Primärkeimen nehmen die durch Abrieb entstehenden Sekundärkeime mit wachsendem Bettinhalt zu, wie in Fig. 2 unten zu sehen ist. Primär- und Sekundärkeime zusammengenommen, ergeben die insgesamt verfügbaren Keime. Dabei durchläuft die Gesamt-Keimzahl ein Minimum. Das bedeutet umgekehrt, daß eine maximale Granulatgröße nicht überschritten werden kann. Außerdem gehören zu einer Granulatgröße 2 verschiedene Bettinhalte. Das legt nahe, die beiden Betriebspunkte auf ihre Stabilität zu überprüfen.

Ein Zustand ist bekanntlich nur dann stabil, wenn die Reaktionen auf Störungen so sind, daß die Störungen wieder rückgängig gemacht werden. Die Störung sei beispielsweise eine Vergrößerung des Bettinhaltes im linken Betriebspunkt. Die Reaktion auf diese Störung besteht in einer Vergrößerung der Granulate und, bei dem sichtenden Austrag, in einem verstärkten Granulatsaustrag. Der Bettinhalt wird also wieder kleiner. Die gleiche rückführende Reaktion tritt ein, wenn die Störung in der anderen Richtung vorgegeben wird. Der Betriebspunkt ist also stabil.

Anders fällt die Prüfung im rechten Betriebspunkt aus. Hier hat ein größerer Bettinhalt ein kleineres Granulat zur Folge. Der sichtende Austrag läßt weniger Granulat austreten. Der Bettinhalt wächst und damit bewegt sich der Gesamtzustand der Anlage von dem Betriebspunkt weg. Zum gleichen Ergebnis kommt man, wenn man die Störung in der anderen Richtung annimmt. Der Betriebspunkt ist also nicht stabil.

Das Maximum der Kurve bestimmt damit den Arbeitsbereich des sich selbst regelnden Verfahrens. Der Granulationsprozeß ist nur auf der linken Seite stabil und ist deshalb auch nur dort anzuwenden.

Ob und wo sich ein Maximum bildet, hängt vom Keimbildungsmechanismus ab, der in erster Linie vom Produkt beeinflußt wird. Wesentliche Produkteigenschaften bei der Primärkeimbildung sind Zähigkeit und Oberflächenspannung der Speise. Durch die Feinheit der Verdüsung kann die Anzahl der Primärkeime beeinflußt werden. Außerdem spielt die Geschwindigkeit der Verfestigung, die von der Fluidisiergastemperatur beeinflußt wird, eine Rolle.

Für die Sekundärkeime ist die Bindewirkung des anhaftenden Feststoffes wesentlich. Ferner sind Partikelgröße, Anströmgeschwindigkeit und die Verweilzeit im Bett von Bedeutung.

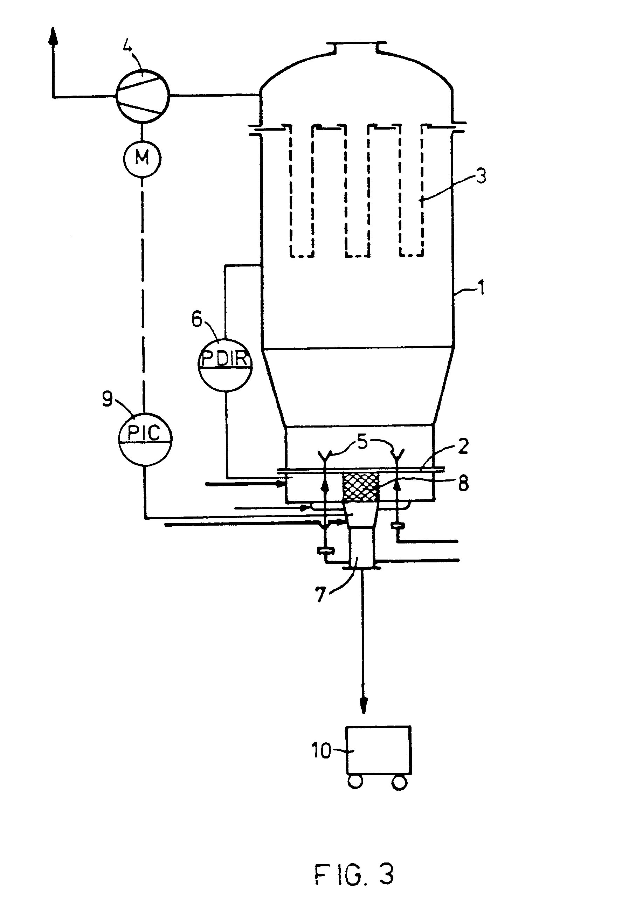

Das erfindungsgemäße Verfahren kann in einer Wirbelbettapparatur durchgeführt werden, wie sie in der Version mit interner Feingutrückführung schematisch in Figur 3 dargestellt ist. Sie besteht aus einem vertikal aufgestellten Behälter 1 mit einem perforierten Anströmboden 2 am unteren Ende und einem aufgesetzten Abgasfilter 3 am oberen Ende. Das entstandene Abgas wird vom Ventilator 4 abgesaugt. Durch den

7

perforierten Anströmboden 2 wird Gas eingeblasen, so daß sich darüber im Granulationsbehälter 1 ein Wirbelbett ausbildet.

Vorzugsweise wird bei dem erfindungsgemäßen Verfahren ein Wirbelbettgranulator eingesetzt, der ein zweiteiliges, vorzugsweise zylindrisches Gefäß darstellt. Dabei findet im unteren Teil der Granulationsprozeß statt. Der obere Teil, der vorzugsweise auf den doppelten Durchmesser des unteren Teiles erweitert ist, dient zur Vorabscheidung des Mittelkornes aus dem Abgas und zur Verfestigung derjenigen Sprühtröpfchen, die keine Partikel im Wirbelbett getroffen haben.

Die Abscheidung von Feingut bzw. Produktstaub aus dem Abgas kann entweder innerhalb oder außerhalb des Wirbelbettgranulators erfolgen. Die interne Abscheidung geschieht vorzugsweise auf Filterschläuchen 3, die im oberen Teil des Behälters 1 angeordnet sind. Voraussetzung für die Verwendbarkeit derartiger Filterschläuche ist, daß das Produkt auf deren Oberfläche agglomeriert. Das so agglomerierte Feingut fällt beim Abreinigen der Filterschläuche mit ausreichender Sinkgeschwindigkeit in das Wirbelbett zurück. Die externe Abscheidung des vom Abgas mitgerissenen Feingutes erfolgt vorzugsweise mit Hilfe eines Zyklons oder eines Filters. Das abgeschiedene Feingut fällt dabei in eine Zellradschleuse, die zur Aufrechterhaltung des Druckunterschiedes zwischen Wirbelbett und Staubabscheider benötigt wird. Aus der Zellradschleuse wird das Feingut vorzugsweise pneumatisch über eine separate Leitung mit Hilfe eines Treibgasstromes in das Wirbelbett zurückgeführt, und zwar vorzugsweise in den Sprühbereich der Düsen, so daß ein gleichmäßiges Wachsen aller Partikel des Korngrößensprektrums gewährleistet ist. Darüber hinaus sind auch andere übliche Methoden der Feingutrückführung anwendbar, sofern dadurch eine gleichmäßige Verteilung im Wirbelbett gewährleistet ist.

In den unteren Teil des Wirbelbettgranulators wird bei dem erfindungsgemäßen Verfahren über einen perforierten Anströmboden das zur Fluidisierung und zur Verfestigung des eingesprühten Produktes dienende Gas eingeleitet. Als Fluidisierungsgase können dabei alle üblichen, unter den Arbeitsbedingungen inerten Gase verwendet werden. Vorzugsweise infrage kommen Luft und Inertgase, wie z. B. Stickstoff.

Die Temperatur des Fluidisierungsgases kann innerhalb eines größeren Bereiches variiert werden. Im allgemeinen arbeitet man bei Temperaturen zwischen -20 und +700°C, vorzugsweise zwischen 0 und 650°C.

Die Geschwindigkeit des Fluidisierungsgases kann innerhalb eines größeren Bereiches variiert werden. Im allgemeinen arbeitet man bei Gasgeschwindigkeiten (= Leerrohrgeschwindigkeiten) von 0,4 bis 4 m/sec, vorzugsweise 0,5 bis 2 m/sec. Die Menge des Fluidisierungsgases errechnet sich dabei aus der Geschwindigkeit des Fluidisierungsgases, der Dichte und der Querschnittfläche des Granulationsteiles des Apparates.

Die Geschwindigkeit des Fluidisierungsgases wird so gewählt, daß ein so stark bewegtes Wirbelbett aufrecht erhalten wird, daß einerseits ein unerwünschtes Zusammenbacken der Partikel nicht auftritt und andererseits der Abrieb im Wirbelbett und das Mitreißen von Feststoff aus dem Wirbelbett nicht übermäßig ansteigt.

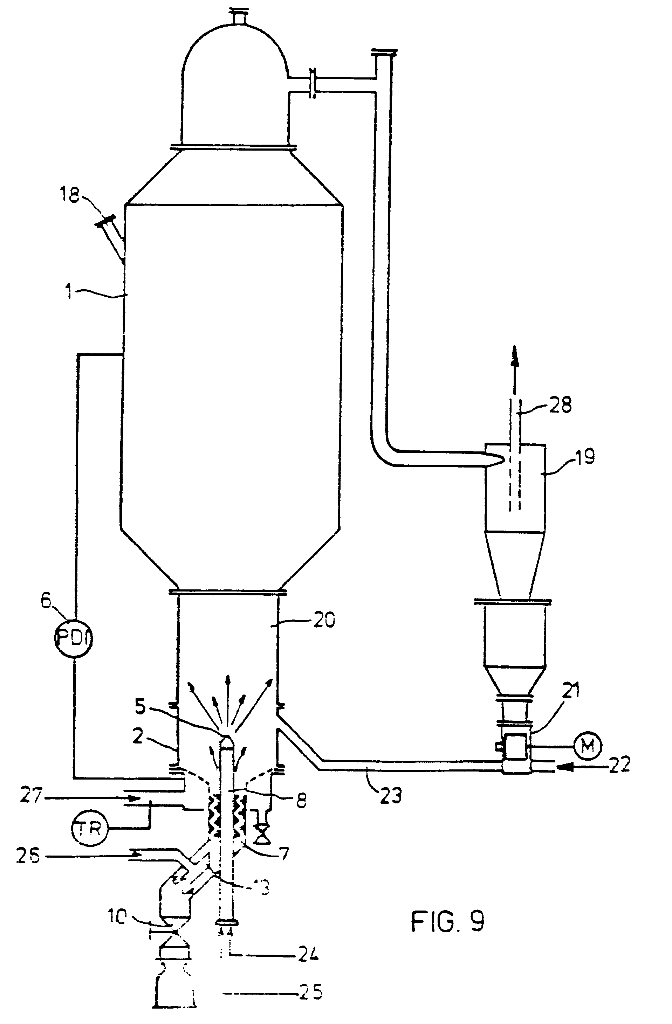

Der Anströmboden ist in der Apparatur zur Durchführung des erfindungsgemäßen Verfahrens entweder eben oder trichterförmig. Vorzugsweise ist der Anströmboden trichterförmig gebaut, wobei der Öffnungswinkel innerhalb eines bestimmten Bereiches variiert werden kann. Bevorzugt ist ein Öffnungswinkel des Trichters zwischen 140° und 160°. Durch die Verwendung von Anströmböden mit derartigen Öffnungswinkeln und mit perforierten Bodenblechen, die eine radial nach innen gerichtete Ausströmung gewährleisten, werden insbesondere die größeren Partikel im Wirbelbett dem zentral in dem Anströmboden mündenden sichtenden Austrag zugeführt. Es sind aber auch andere Arten der Anströmboden/ Sichter-Anordnung möglich. Beispielsweise kann der Granulator auch in rechteckiger Form mit einem ebenen oder geneigten Boden gebaut werden. Auch die Verwendung mehrerer, über die Anströmfläche verteilter Sichter ist möglich. Dabei können die Bodensegmente eben oder zum Sichter hin geneigt sein. In einer besonders bevorzugten Form hat die Querschnittfläche des Bodensegments die Form eines Sechseckes. In der Mitte dieser Bodensegmente ist ähnlich der in Figur 9 dargestellten Anordnung jeweils eine Düse umgeben von einem ringförmigen Sichter angeordnet. Auf diese Weise wird der Granulator auf einer Vielzahl gleichartiger Bodensegmente aufgebaut. Mit dieser Anordnung wird erreicht, daß die Sichthäufigkeit unabhängig von den Apparateabmessungen konstant bleibt.

Wie ferner aus der Fig. 3 hervorgeht, sind in Höhe des Wirbelbettes Sprühdüsen 5 angebracht, durch welche das flüssige Produkt in fein verteilter Form in das Wirbelbett eingespeist wird. Das Erreichen und das Halten des stationären Zustandes im Wirbelbett wird über den sich selbständig ein stellenden Bettdruckverlust kontrolliert. Der Bettdruckverlust wird von dem Druckmeßgerät 6 angezeigt und registriert. Abweichungen vom Normalwert sind ein Indiz für Störungen des Granulationsprozesses. An dem Anströmboden 2 ist zentral ein Austragsrohr 7 angebracht, in dessen oberen, an den Anströmboden 2 angrenzenden Teil ein Zick-Zack-Sichter 8 bündig eingebaut ist. Ein weiterer Druckregler 9 ist zwischen dem Ausgang des Zick-Zack-Sichters 8 und dem Abgasventilator 4 enthalten. Dieser Regler 9 stellt den Abgasventilator 4 in der Weise nach, daß am Ausgang des Zick-Zack-Sichters stets nur ein geringfügig unter Atmosphärendruck liegender Druck herrscht. Auf diese Weise kann auf ein weiteres, den Zick-Zack-Sichter abschließendes Organ, wie z. B. eine Schleuse, verzichtet werden. Das fertige Granulat fällt unbehindert aus dem Austrag 7 heraus und wird in einem Vorratsbehälter 10 aufgefangen.

Die Versprühung des in das Wirbelbett eingedüsten flüssigen Produktes erfolgt bei dem erfindungsgemäßen Verfahren von unten nach oben in das Wirbelbett.

Zum Einsprühen des flüssigen Produktes in das Wirbelbett werden bei dem erfindungsgemäßen Verfahren

vorzugsweise Zweistoffdüsen verwendet, die das flüssige Produkt fein zerstäuben und außerdem zu einer guten Durchmischung des Wirbelbettes beitragen. Wenn der Neutralpunkt des Druckprofiles im sichtenden Austrag liegt, herrscht im Granulator Unterdruck. Die Düsen können im laufenden Betrieb ausgewechselt werden, ohne daß Gas in die Umgebung entweicht. Die in den Granulator von außen durch die Einbauöffnungen der Düsen einströmende Luft verhindert obendrein das Entweichen von Produkt. Um bei inertisierten Anlagen einen Lufteinbruch während des Wechselns zu vermeiden, wird eine Ausführungsform bevorzugt, bei der der einbrechenden Luft Zerstäubungsgas entgegenströmt.

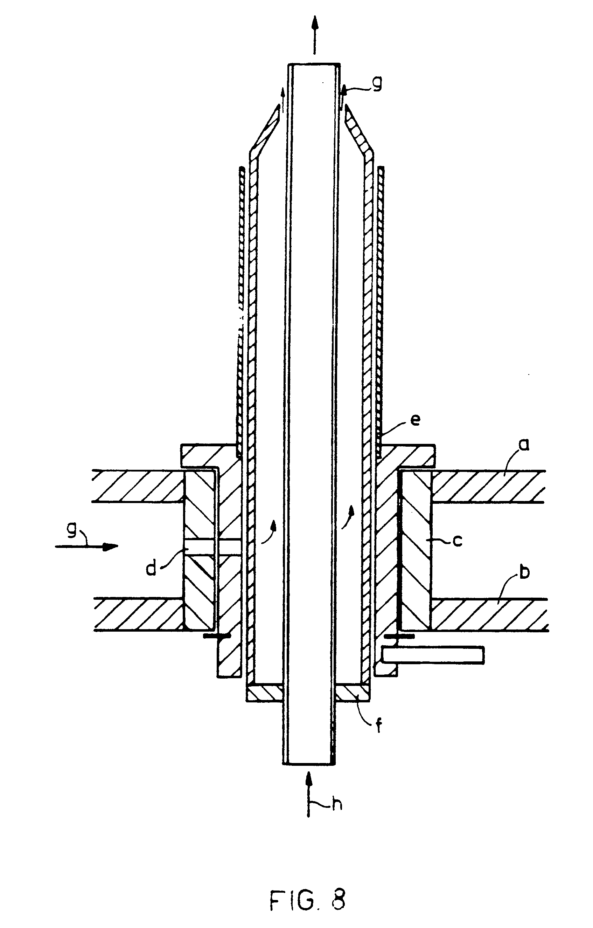

Eine schematische Darstellung einer derartigen Anordnung ist in Figur 8 wiedergegeben. In dieser Figur bedeuten:

a = Boden der Anströmhaube
b = weiterer Boden
c = Buchse
d = seitliche Bohrung
e = Düsenführungsrohr
f = Zweistoffdüse
g = Zerstäubungsgas-Zufuhr
h = Produktzufuhr

Das zur Zerstäubung des flüssigen Produktes dienende Gas (g) wird in diesem Falle durch einen Raum geleitet, der unterhalb des Anströmbodens (a) durch einen zusätzlichen Boden (b) gebildet wird. In die den Raum begrenzenden Böden ist für jede Düse (f) eine mit einer seitlichen Bohrung (d) versehene Buchse (c) zur Aufnahme des Düsenführungsrohres (e) eingeschweißt. Das Düsenführungsrohr ist dabei so lang, daß es von der Unterkante der Buchse bis kurz über den Anströmboden reicht. Es ist ebenfalls mit einer seitlichen Bohrung versehen, so daß durch Drehung des Düsenführungsrohres die Zuleitung von Zerstäubungsgas zur Düse ganz oder teilweise unterbrochen werden kann. Wenn die Düse aus dem Düsenführungsrohr herausgezogen ist, muß soviel Zerstäubungsgas in die Einbauöffnung strömen, daß keine Partikel durch diese Öffnung aus dem Wirbelbett herausfallen können und außerdem keine Umgebungsluft in den Granulator einströmt. Die Zweistoffdüse enthält ebenfalls eine seitliche Bohrung, durch welche das Zerstäubungsgas dann, wenn die Düse eingebaut ist, aus dem Düsenführungsrohr in den Gasführungskanal der Düse strömen kann.

Die Zuspeisung des flüssigen Produktes wird bei der Durchführung des erfindungsgemäßen Verfahrens in der bei Granulatoren und Sprühtrocknern üblichen Weise über die Temperatur der Abluft geregelt.

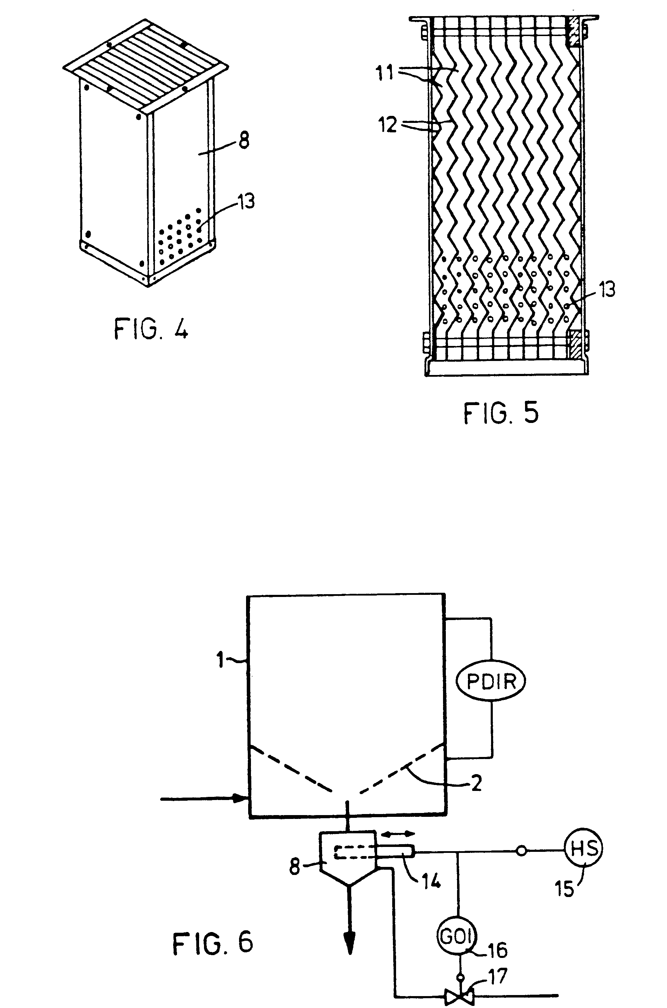

Wie aus den Figuren 4 und 5 zu entnehmen ist, besteht der Zick-Zack-Sichter 8 in der dargestellten erfindungsgemäßen Vorrichtung aus einer Vielzahl von geraden, rechteckigen Kanälen 11, die unter einem Winkel von etwa 120° aufeinander stoßen. Die Kanäle 11 werden durch zick-zackförmig gebogene Riffelbleche 12 begrenzt. Am unteren Ende des Zick-Zack-Sichters 8 ist ein Gasverteiler 13 angeordnet, mit dessen Hilfe allen Sichtgaskanälen die gleiche Gasmenge zugeführt wird. In jedem Sichterelement, worunter hier die Strecke zwischen zwei benachbarten Sichtstellen zu verstehen ist, bildet sich eine Wirbelwalze aus. Das zu sichtende Gut rutscht auf der jeweils unteren Fläche herab, durchquert den Sichtgasstrom, bewegt sich dann auf der jeweils oberen Fläche aufwärts und durchquert hier erneut den Sichtgasstrom. Bei jedem Durchqueren erfolgt eine Sichtung, so daß trotz geringer Trennschärfe in den einzelnen Sichterelementen infolge der Wiederholung insgesamt eine hohe Trennschärfe erreicht wird.

Beim Arbeiten mit Zick-Zack-Sichtern ist es besonders vorteilhaft, einen Sichter mit einstellbarem Querschnitt einzusetzen (vgl. Figur 5).

Die Festlegung des erforderlichen Mindest-Durchtrittsquerschnittes der Sichtstrecke im Zick-Zack-Sichter muß experimentell erfolgen, weil er von der Kornverteilung des Bettes und dem auszutragenden Granulatstrom abhängt. Ist der Durchtrittsquerschnitt zu klein, dann ist ein stationärer Betrieb gemäß Fig. 1 nicht möglich, da keine ausreichende Granulatmenge ausgetragen wird und in diesem Fall Bettinhalt und Korngröße unkontrolliert anwachsen. Ist der Durchtrittsquerschnitt hingegen zu groß, dann ergeben sich zwar keine Störungen der Granulatbildung, jedoch kann diese Betriebsweise unter energetischen Aspekten ungünstig sein. Zur Änderung des Durchtrittsquerschnitten ist deshalb im Sichter (vgl. Fig. 6) eine Verstelleinrichtung 14 enthalten, mit der die Spaltlänge im Zick-Zack-Sichter und damit der Sichterquerschnitt verändert werden kann. Die Verstelleinrichtung besteht aus kammartig miteinander verbundenen, dem Zick-Zack-Profil angepaßten Stegen, die mittels eines Vortriebes 15 quer, also senkrecht zur Sichterachse, verschiebbar sind. Die Verstelleinrichtung 14 ist mit einer Regelvorrichtung 16 verbunden, welche den Sichtgasstrom über das Ventil 17 in der Weise nachregelt, daß die Strömungsgeschwindigkeit im Zick-Zack-Sichter 8 trotz des veränderlichen Querschnittes konstant bleibt. Die optimale Einstellung der Verstelleinrichtung wird empirisch ermittelt, indem zunächst im voll geöffneten Zustand der für die gewünschte Granulatgröße erforderliche Sichtgasdurchsatz gesucht wird. Dabei stellt sich der Bettinhalt selbsttätig ein. Sodann wird der freie Sichterquerschnitt über die Verstelleinrichtung soweit reduziert, bis sich der Bettinhalt (gemessen über den Bettdruckverlust) erhöht. Damit ist der für den Granulationsprozeß mindestens erforderliche Sichterquerschnitt gefunden. Für den stationären Betrieb wird der Sichterquerschnitt etwas größer als unbedingt erforderlich gewählt, damit stabile Betriebsbedingungen gewährleistet sind.

Eine besonders vorteilhafte Vorrichtung zur Durchführung des erfindungsgemäßen Verfahrens ist in Fig. 9 schematisch dargestellt. In dieser Zeichnung haben die angegebenen Zahlen die folgenden Bedeutungen:

1 = Granulator-Behälter
2 = Anströmboden
5 = Sprühdüse
6 = Druckmeßgerät
7 = Austragsrohr
8 = Zick-Zack-Sichter in Ringspalt-Form
10 = Produktaustrag
13 = Sichtgasverteiler
18 = Einfüllstutzen für Startgranulat
19 = Feingutabscheider (Zyklon)
20 = zylindrischer Schuß
21 = Zellradschleuse
22 = Treibgaszufuhr
23 = Feingutrückführung
24 = Zerstäubungsgas-Zufuhr
25 = Zufuhr für das zu versprühende Produkt
26 = Sichtgaszufuhr
27 = Zufuhr für Fluidisierungsgas
28 = Abgasaustritt zum Ventilator

In den erfindungsgemäß erhaltenen Granulaten können die prozentualen Anteile der enthaltenen Komponenten Innerhalb größerer Bereich variiert werden. Der Anteil an aktiver Komponente bzw. an aktiven Komponenten liegt im allgemeinen zwischen 1 und 100 Gew.-%. Werden Schmelzen oder Lösungen einzelner aktiver Stoffe eingesprüht, so besteht das resultierende Granulat bis 100 Gew.-% aus den jeweiligen Stoffen, gegebenenfalls sind bis zu 5 Gew.-% an Lösungs- bzw. Verdünnungsmittel enthalten. Werden Flüssigkeiten versprüht, die neben den aktiven Komponenten noch weitere Bestandteile, wie inerte Füllmaterialien, Dispergiermittel, Bindemittel und/oder andere Zusatzstoffe, enthalten, so liegt der Anteil an aktiven Komponenten im allgemeinen zwischen 5 und 95 Gew.-%, vorzugsweise zwischen 10 und 80 Gew.-%. Der Anteil an inerten Füllmaterialien beträgt im allgemeinen 0 bis 99 Gew.-%, vorzugsweise 0 bis 95 Gew.-%. Dispergiermittel und/oder Bindemittel sowie gegebenenfalls weitere Zusatzstoffe sind im allgemeinen in Anteilen von 0 bis 40 Gew.-%, vorzugsweise 0 bis 30 Gew.-%, vorhanden.

Die erfindungsgemäß erhalten Granulat-Partikel weisen im allgemeinen eine Teilchengröße von 0,1 bis 3 mm, vorzugsweise von 0,2 bis 2 mm auf. Die Korngröße der erfindungsgemäßen Granulat-Partikel richtet sich dabei nach dem jeweiligen Verwendungszweck der Granulate. Die Korngrößenverteilung ist im Vergleich zu herkömmlich hergestellten Granulaten sehr eng. Im allgemeinen weicht der Teilchendurchmesser nur um maximal eine halbe mittlere Korngröße von dem mittleren Teilchendurchmesser ($d_{50}$) ab.

Die erfindungsgemäß erhaltenen Granulat-Partikel sind einheitlich geformt und besitzen eine hohe Festigkeit. Sie weisen eine kompakte, mikroporöse Struktur auf und sind trotzdem in Wasser oder anderen Lösungsmitteln spontan dispergierbar bzw. löslich. Unter spontaner Dispergierbarkeit bzw. Löslichkeit ist im vorliegenden Fall zu verstehen, daß sich die Teilchen im allgemeinen in 0,5 bis 3 Minuten, vorzugsweise in 1 bis 2 Minuten, vollständig dispergieren bzw. lösen.

Die erfindunsgemäß erhaltenen Granulate lassen sich je nach den enthaltenen aktiven Komponenten für verschiedenste Zwecke einsetzen. Diejenigen Granulate, die agrochemische Wirkstoffe als aktive Komponenten enthalten, lassen sich nach üblichen Methoden im Pflanzenschutz verwenden. Beispielsweise werden derartige Granulate in Wasser dispergiert oder gelöst. Die dabei entstehenden Dispersionen bzw. Lösungen lassen sich gegebenenfalls nach vorherigem Verdünnen nach üblichen Methoden auf die Pflanzen und/oder deren Lebensraum ausbringen, also z. B. durch Spritzen, Sprühen oder Gießen. Die Aufwandmenge richtet sich dabei nach der Konzentration der Dispersion bzw. Lösung und nach der jeweiligen Indikation sowie nach den enthaltenen aktiven Komponenten.

Sind in den erfindungsgemäß erhaltenen Granulaten keine agrochemischen Wirkstoffe, sondern andere aktive Komponenten enthalten, so erfolgt die Anwendung nach den auf dem jeweiligen Gebiet der Technik üblichen Methoden. Die Aufwandmenge ist auch hier abhängig von den jeweiligen aktiven Komponenten und der jeweiligen Indikation.

Die nach dem erfindungsgemäßen Verfahren hergestellten Granulate können in manchen Fällen auch einer thermischen Nachbehandlung unterzogen werden. So lassen sich zum Beispiel Zeolith-Granalien härten bzw. aktivieren, indem man sie auf Temperaturen zwischen 300 und 700°C, vorzugsweise zwischen 350 und 650°C erhitzt. Granulate, die anorganische Oxide enthalten und als Katalysatoren bzw. Katalysator-Träger in Betracht kommen, lassen sich härten, indem man sie auf Temperaturen zwischen 500 und 1000°C erhitzt.

Das erfindungsgemäße Verfahren wird durch die folgenden Beispiele veranschaulicht.

## Herstellungsbeispiele

### Beispiel 1

In einer erfindungsgemäßen Granulierapparatur des in Figur 9 dargestellten Typs mit folgenden Abmessungen

| | |
|---|---|
| Durchmesser Anströmboden | 225 mm |
| Durchmesser Beruhigungsraum | 450 mm |
| Gesamthöhe des Granulators | ca. 2 m |
| Sprühdüsen | 1 Zweistoffdüse |
| Sichterquerschnitt | 880 mm$^2$ |
| Zick-Zack-Sichter | 10 Glieder |

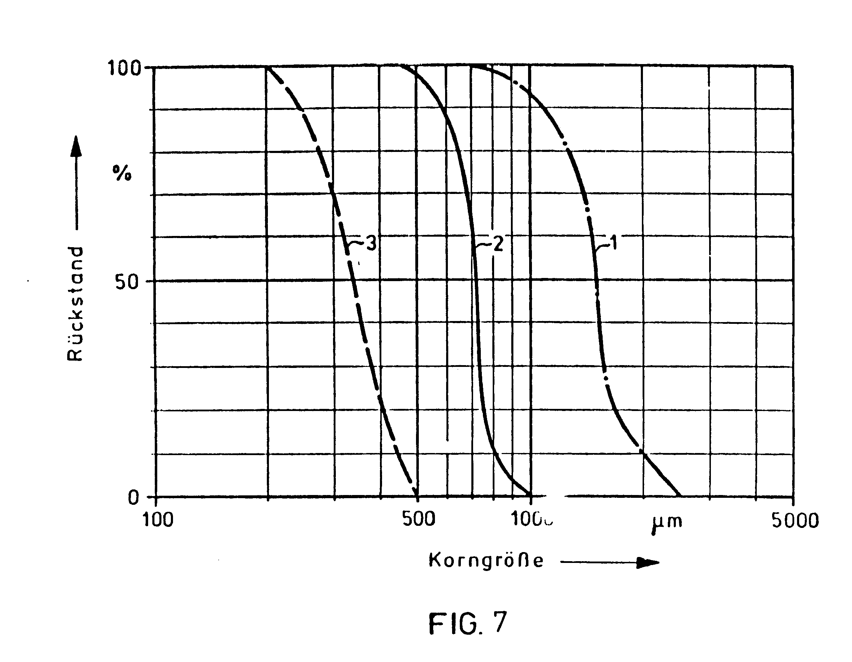

wird eine Granulierung aus einer wäßrigen Kochsalzlösung mit einem Gehalt von 23 Gew.-% Kochsalz durchgeführt. Diese Lösung wird bei einer Temperatur von 20°C in den Wirbelbettgranulator gesprüht. Zur Fluidisierung des Bettinhaltes wird Luft in einer Menge von 127,5 kg pro Stunde eingeblasen. Die Eintrittstemperatur des Fluidisierungsgases beträgt 180°C; die Austrittstemperatur beträgt 80°C. Als Sichtgas wird Luft in einer Menge von 18 kg/Stunde eingeblasen. Die Temperatur des Sichtgases beträgt 20°C. Der Inhalt des Wirbelbettes beträgt 3 kg; die Granulierleistung liegt bei 1,5 kg pro Stunde. Man erhält ein freifließendes Granulat mit einem Schüttgewicht von 1075 kg/m$^3$ und einer mittleren Korngröße $d_{50}$ 1,5 mm. Die durch Siebanalyse ermittelte Korngrößenverteilung ist in Fig. 7 durch die Kurve 1 dargestellt.

### Beispiel 2

In der im Beispiel 1 beschriebenen Apparatur wird die Granulierung einer wäßrigen Suspension durchgeführt.

Zunächst wird eine pulvrige Vormischung, die aus

50 Gew.-% 2-Isopropoxy-phenyl-N-methylcarbamat
2 Gew.-% Magnesiumoxid,
4 Gew.-% hochdisperser Kieselsäure,
10 Gew.-% Alkylarylsulfonat und
34 Gew.-% Gesteinsmehl

besteht, unter Rühren mit soviel Wasser vermengt, daß eine wäßrige Suspension mit einem Feststoffgehalt von 60 Gew.-% resultiert. Diese Suspension wird bei einer Temperatur von 20°C in den Wirbelbettgranulator gesprüht. Die Granulierung erfolgt unter den nachstehend angegebenen Bedingungen.

| | |
|---|---|
| Fluidisierungsgas: | Luft |
| | Gasdurchsatz 127,5 kg/h |
| | Eintrittstemperatur 95°C |
| | Austrittstemperatur 35°C |
| Sichtgas: | Luft |
| | Gasdurchsatz 12 kg/h |
| | Gastemperatur 20°C |
| Bettinhalt: | 1,2 kg |
| Granulationsleistung: | 4 kg/h |

Man erhält ein freifließendes Granulat mit einem Schüttgewicht von 785 kg/m$^3$ und einer mittleren Korngröße $d_{50}$ = 0,7 mm. Die durch Siebanalyse ermittelte Korngrößenverteilung ist in Fig. 7 durch die Kurve 2 dargestellt.

### Beispiel 3

In der im Beispiel 1 beschriebenen Apparatur wird die Granulierung einer Schmelze durchgeführt.
Ein Alkylpolyglykolether, der bei 60°C schmiltzt, wird bei einer Temperatur von 70°C in den Wirbelbettgranulator gesprüht. Die Granulierung erfolgt unter den nachstehend angegebenen Bedingungen.

| Fluidisierungsgas: | Luft |
| --- | --- |
| | Gasdurchsatz 127,5 kg/h |
| | Eintrittstemperatur 18°C |
| | Austrittstemperatur 25°C |
| Sichtgas: | Luft |
| | Gasdurchsatz 8 kg/h |
| | Gastemperatur 20°C |
| Bettinhalt: | 1,8 kg |
| Granulationsleitsung: | 3 kg/h |

Man erhält ein freifließendes Granulat mit einem Schüttgewicht von 535 kg/m$^3$ und einer mittleren Korngröße $d_{50}$ = 0,36 mm. Die durch Siebanalyse ermittelte Korngrößenverteilung ist in Fig. 7 durch die Kurve 3 dargestellt.

## Beispiel 4

In der erfindungsgemäßen Apparatur von Beispiel 1 wird die Granulierung einer wäßrigen Suspension (Slurry) durchgeführt. Dabei wird als Sprühdüse eine Zweistoffdüse verwendet. Als sichter dient ein Zick-Zack-Sichter. Die Abscheidung des Feingutes erfolgt extern mittels Zyklon.
Zunächst wird eine Vormischung, die aus

70 Gew.-% 6-Phenyl-4-amino-3-methyl-1,2,4-triazin-5-(4H)-on,
5 Gew.-% Alkylarylsulfonat,
5 Gew.-% gemahlener Tonerde und
20 Gew.-% Dispergiermittel auf Basis von Ligninsulfonat

besteht, unter Rühren mit soviel Wasser vermengt, daß eine wäßrige Suspension mit einem Feststoffgehalt von 65 Gew.-% resultiert. Diese Slurry wird bei einer Temperatur von 20°C mit Hilfe von Luft in den Wirbelbettgranulator gesprüht. Die kontinuierliche Granulierung erfolgt unter den nachstehend angegebenen Bedingungen.

| Fluidisierungsgas: | Luft |
| --- | --- |
| | Gasdurchsatz 130 kg/h |
| | Eintrittstemperatur 96°C |
| | Austrittstemperatur 60°C |
| Sichtgas: | Luft |
| | Gasdurchsatz 8 kg/h |
| | Gastemperatur 20°C |
| Treibgas: | Luft |
| | Gasdurchsatz 9 kg/h |
| Granulationsleistung: | 2,4 kg/h |

Man erhält ein staubfreies, freifließendes Granulat mit einem Achüttgewicht von
Die Granulatpartikel sind nahezu rund. Mittlere Korngröße $d_{50}$ =
Das Granulat dispergiert in Wasser innerhalb von Sekunden.

## Beispiel 5

In der im Beispiel 1 erwähnten Apparatur wird die Granulierung einer wäßrigen Suspension (Slurry) durchgeführt.
Zunächst wird eine pulvrige Vormischung, die

N-(5-Ethylsulfonyl-1,3,4-thiadiazol-2-yl)-N,N'-dimethylharnstoff

enthält, unter Rühren mit soviel Wasser vermengt, daß eine wäßrige Suspension mit einem Feststoffgehalt von 60 Gew.-% resultiert. Diese Suspension wird in den Wirbelbettgranulator mit Hilfe von Zerstäubungsgas eingesprüht. Die Granulierung erfolgt unter den nachstehend angegebenen Bedingungen.

12

| Fluidisierungsgas: | Stickstoff |
| | Gasdurchsatz 127 kg/h |
| | Eintrittstemperatur 80°C |
| | Austrittstemperatur 40°C |
| Sichtgas: | Stickstoff |
| | Gasdurchsatz 9 kg/h |
| | Gastemperatur 40°C |
| Zerstäubungsgas: | Stickstoff |
| | Gasdurchsatz 6 kg/h |
| | Gastemperatur 20°C |
| Treibgas (Rückführung): | Stickstoff |
| | Gasdurchsatz 15 kg/h |
| | Gastemperatur 40°C |
| Granulationsleistung: | 3 kg/h |

Man erhält ein staubfreies, freifließendes Granulat mit einem Schüttgewicht von 690 kg/m$^3$. Mittlere Korngröße $d_{50}$ = 500 μm.

## Beispiel 6

In der im Beispiel 1 erwähnten Apparatur wird die Granulierung einer wäßrigen Suspension (Slurry) durchgeführt.

Zunächst wird eine pulvrige Vormischung, die

N,N-Dimethyl-N'-(fluordichlormethylmercapto)-N'-(4-methylphenyl)-sulfamid,

enthält, unter Rühren mit soviel Wasser vermengt, daß eine wäßrige Suspension mit einem Feststoffgehalt von 60 Gew.-% resultiert. Diese Suspension wird in den Wirbelbettgranulator mit Hilfe von Zerstäubungsgas eingesprüht. Die Granulierung erfolgt unter den nachstehend angegebenen Bedingungen.

| Fluidisierungsgas: | Stickstoff |
| | Gasdurchsatz 127 kg/h |
| | Eintrittstemperatur 95°C |
| | Austrittstemperatur 35°C |
| Sichtgas: | Stickstoff |
| | Gasdurchsatz 11,5 kg/h |
| | Gastemperatur 40°C |
| Zerstäubungsgas: | Stickstoff |
| | Gasdurchsatz 6 kg/h |
| | Gastemperatur 20°C |
| Treibgas (Rückführung): | Stickstoff |
| | Gasdurchsatz 20,8 kg/h |
| | Gastemperatur 40°C |
| Granulationsleistung: | 3,8 kg/h |

Man erhält ein staubfreies, freifließendes Granulat mit einem Schüttgewicht von 683 kg/m$^3$. Mittlere Korngröße $d_{50}$ = 400 μm.

## Beispiel 7

In der im Beispiel 1 erwähnten Apparatur wird die Granulierung einer wäßrigen Suspension (Slurry) durchgeführt.
Zunächst wird eine pulvrige Vormischung, die

1-(4-Chlorphenoxy)-3,3-dimethyl-1-(1,2,4-triazol-1-yl)-butan-2-ol,

enthält, unter Rühren mit soviel Wasser vermengt, daß eine wäßrige Suspension mit einem Feststoffgehalt von 50 Gew.-% resultiert. Diese Suspension wird in den Wirbelbettgranulator mit Hilfe von Zerstäubungsgas eingesprüht. Die Granulierung erfolgt unter den nachstehend angegebenen Bedingungen.

| Fluidisierungsgas: | Stickstoff |
| | Gasdurchsatz 127 kg/h |
| | Eintrittstemperatur 85°C |
| | Austrittstemperatur 35°C |
| Sichtgas: | Stickstoff |
| | Gasdurchsatz 11,5 kg/h |
| | Gastemperatur 35°C |
| Zerstäubungsgas: | Stickstoff |
| | Gasdurchsatz 6,5 kg/h |
| | Gastemperatur 20°C |
| Treibgas (Rückführung): | Stickstoff |
| | Gasdurchsatz 19 kg/h |
| | Gastemperatur 35°C |
| Granulationsleistung: | 2,5 kg/h |

Man erhält ein staubfreies, freifließendes Granulat mit einem Schüttgewicht von 942 kg/m³. Mittlere Korngröße $d_{50}$ = 400 µm.

**Beispiel 8**

In der im Beispiel 1 erwähnten Apparatur wird die Granulierung einer wäßrigen Suspension (Slurry) durchgeführt.
Zunächst wird eine pulvrige Vormischung, die

1-(4-Chlorphenoxy)-3,3-dimethyl-1-(1,2,4-triazol-1-yl)-butan-2-on,

enthält, unter Rühren mit soviel Wasser vermengt, daß eine wäßrige Suspension mit einem Feststoffgehalt von 60 Gew.-% resultiert. Diese Suspension wird in den Wirbelbettgranulator mit Hilfe von Zerstäubungsgas eingesprüht. Die Granulierung erfolgt unter den nachstehend angegebenen Bedingungen.

| Fluidisierungsgas: | Stickstoff |
| | Gasdurchsatz 127 kg/h |
| | Eintrittstemperatur 50°C |
| | Austrittstemperatur 29°C |
| Sichtgas: | Stickstoff |
| | Gasdurchsatz 25 kg/h |
| | Gastemperatur 40°C |
| Zerstäubungsgas: | Stickstoff |
| | Gasdurchsatz 6 kg/h |
| | Gastemperatur 20°C |
| Treibgas (Rückführung): | Stickstoff |
| | Gasdurchsatz 10 kg/h |
| | Gastemperatur 40°C |
| Granulationsleistung: | 1,5 kg/h |

Man erhält ein staubfreies, freifließendes Granulat mit einem Schüttgewicht von 667 kg/m³. Mittlere Korngröße $d_{50}$ = 500 µm.

**Beispiel 9**

In der im Beispiel 1 erwähnten Apparatur wird die Granulierung einer wäßrigen Suspension (Slurry) durchgeführt.
Zunächst wird eine pulvrige Vormischung, die

N-(2-Benzthiazolyl)-N,N'-dimethylharnstoff

enthält, unter Rühren mit soviel Wasser vermengt, daß eine wäßrige Suspension mit einem Feststoffgehalt von 50 Gew.-% resultiert. Diese Suspension wird in den Wirbelbettgranulator mit Hilfe von Zerstäubungsgas eingesprüht. Die Granulierung erfolgt unter den nachstehend angegebenen Bedingungen.

| Fluidisierungsgas: | Stickstoff<br>Gasdurchsatz 127 kg/h<br>Eintrittstemperatur 85° C<br>Austrittstemperatur 40° C |
| Sichtgas: | Stickstoff<br>Gasdurchsatz 15,5 kg/h<br>Gastemperatur 40° C |
| Zerstäubungsgas: | Stickstoff<br>Gasdurchsatz 6 kg/h<br>Gastemperatur 20° C |
| Treibgas (Rückführung): | Stickstoff<br>Gasdurchsatz 21 kg/h<br>Gastemperatur 35° C |
| Granulationsleistung: | 3,3 kg/h |

Man erhält ein staubfreies, freifließendes Granulat mit einem Schüttgewicht von 575 kg/m³. Mittlere Korngröße $d_{50}$ = 1000 µm.

**Beispiel 10**

In der im Beispiel 4 erwähnten Apparatur wird die Granulierung einer wäßrigen Suspension (Slurry) durchgeführt.

Zunächst wird eine pulvrige Vormischung, die

97,5 Gew.-% 4-Amino-6-(1,1-dimethylethyl)-3-methylthio-1,2,4-triazin-5-(4H)-on,

enthält, unter Rühren mit soviel Wasser vermengt, daß eine wäßrige Suspension mit einem Feststoffgehalt von 50 Gew.-% resultiert. Diese Suspension wird in den Wirbelbettgranulator mit Hilfe von Zerstäubungsgas eingesprüht. Die Granulierung erfolgt unter den nachstehend angegebenen Bedingungen.

| Fluidisierungsgas: | Stickstoff<br>Gasdurchsatz 127 kg/h<br>Eintrittstemperatur 100° C<br>Austrittstemperatur 40° C |
| Sichtgas: | Stickstoff<br>Gasdurchsatz 11,5 kg/h<br>Gastemperatur 40° C |
| Zerstäubungsgas: | Stickstoff<br>Gasdurchsatz 6,6 kg/h<br>Gastemperatur 20° C |
| Treibgas (Rückführung): | Stickstoff<br>Gasdurchsatz 14,5 kg/h<br>Gastemperatur 40° C |
| Granulationsleistung: | 4,5 kg/h |

Man erhält ein staubfreies, freifließendes Granulat mit einem Schüttgewicht von 530 kg/m³. Mittlere Korngröße $d_{50}$ = 450 µm.

**Patentansprüche**

1. Verfahren zur kontinuierlichen Herstellung von Granulaten mit enger Kongrößenverteilung, dadurch gekennzeichnet, daß man

a) das zu granulierende Produkt in flüssiger Form mittels einer Sprühdüse von unten nach oben in ein Wirbelbett einsprüht,

b) die mit dem Abgas aus dem Wirbelbett entweichenden Feingutanteile abscheidet und als Keime für die Granulatbildung in das Wirbelbett zurückführt,

c) allein durch Einstellung des Sichtgasstromes den Granulationsprozeß im Wirbelbett so beeinflußt, daß Granulate in der durch den Sichtgasstrom vorgegebenen Größe entstehen, und

d) das fertige Granulat allein über einen oder mehrere in den Anströmboden der Wirkelbettapparatur eingesetzte Gegenstrom-Schwerkraft-Sichter entnimmt und

e) gegebenenfalls die so erhaltenen Granulate einer thermischen Nachbehandlung unterwirft.

2. Verfahren gemäß Anspruch 1, dadurch gekennzeichnet, daß man als zu granulierendes Produkt eine Flüssigkeit verwendet, die eine oder mehrere aktive Komponenten enthält.

3. Verfahren gemäß Anspruch 2, dadurch gekennzeichnet, daß als aktive Komponenten agrochemische Wirkstoffe, Wirkstoffe zur Bekämpfung von Schädlingen im Haushalts- und Hygienebereich, pharmakologisch wirksame Stoffe, Nährstoffe, Süßstoffe, Farbstoffe, organische Chemikalien und/oder anorganische Chemikalien verwendet werden.

4. Verfahren gemäß Anspruch 1, dadurch gekennzeichnet, daß man die aus dem wirbelbett entweichenden Feingutanteile kontinuierlich mit Hilfe eines Zyklons oder Staubfilters aus der Abluft abscheidet und in das Wirbelbett zurückführt, oder eine interne Feingutrückführung mit Hilfe eines über dem Wirbelbett angeordneten Staubfilters bewirkt.

5. Verfahren gemäß Anspruch 1, dadurch gekennzeichnet, daß man als Austrag einen oder mehrere Zick-Zack-Sichter verwendet, bei dem sich die Spaltlänge und damit der Sicherquerschnitt durch kammartig miteinander verbundene, dem Zick-Zack-Profil angepaßte und senkrecht zur Sichterachse verschiebbare Stege einstellen läßt.

6. Verfahren gemäß Anspruch 1, dadurch gekennzeichnet, daß man das fertige Granulat über einen Anströmboden entnimmt, der in mehrere sechseckige Segmente aufgeteilt ist, die jeweils zu ihrer Mitte hin geneigt sind und dort eine Düse sowie einen sie umgebenden ringspaltförmigen Gegenstrom-Schwerkraft-Sichter als Austrag aufweisen.

7. Vorrichtung zur kontinuierlichen Herstellung von Granulaten mit enger Korngrößenverteilung, dadurch gekennzeichnet, daß die Vorrichtung aus einem Wirbelschichtgranulator besteht,

- der Einrichtungen zur Verdüsung von unten nach oben des in einer sprühfähigen Form zugeführten Produktes enthält,
- der ferner ein zur Rückführung von den aus dem Wirbelbett entweichenden Feingutanteilen geeignetes System entält und
- an dessen Anströmboden einer oden mehrere Gegenstrom-Schwerkraft-Sichter angebracht sind.

8. Vorrichtung gemäß Anspruch 7, dadurch gekennzeichnet, daß als Gegenstrom-Schwerkraft-Sichter ein Zick-Zack-Sichter verwendt wird.

9. Vorrichtung gemäß Anspruch 7, dadurch gekennzeichnet, daß als Gegenstrom-Schwerkraft-Sichter ein Zick-Zack-Sichter verwendet wird, bei dem sich die Spaltlänge und damit der Sichterquerschnitt durch kammartig miteinander verbundene, dem Zick-Zack-Profil angepaßte und senkrecht zur Sichterachse verschiebbar Stege einstellen läßt.

10. Vorrichtung gemäß Anspruch 7, dadurch gekennzeichnet, daß zur Einspeisung des zu granulierenden Produkts Zweistoffdüsen verwendet werden, deren Versorgung mit Zerstäubungsgas so gestaltet ist, daß beim Düsenwechsel während des laufenden Betriebes keine Umgebungsluft in den Granulator ein- und kein Produkt aus dem Granulator austritt.

11. Vorrichtung gemäß Anspruch 7, dadurch gekennzeichnet, daß der Anströmboden in mehrere sechseckige Segmente aufgeteilt ist, die jeweils zu ihrer Mitte hin geneigt sind und dort eine Düse sowie einen sie umgebenden ringspaltförmigen Gegenstrom-Schwerkraft-Sichter als Austrag aufweisen.

**Claims**

1. Process for the continuous preparation of granules having a narrow particle size distribution, characterized in that

a) the product to be granulated is sprayed into a fluidized bed from below in liquid form by means of a spraying nozzle,
b) the fine material escaping from the fluidized bed with the off-gas is separated off and returned to the fluidized bed as nuclei for the granule formation,
c) the granulation process in the fluidized bed is influenced so that granules of the size predetermined by the sifting gas stream are formed simply by adjusting the sifting gas stream, and
d) the finished granules are discharged simply via one or more countercurrent gravity sifters installed in the inflow plate of the fluidized bed apparatus and
e) if appropriate, the granules thus obtained are subjected to a thermal aftertreatment.

2. Process according to claim 1, characterized in that, as the product to be granulated, there is used a liquid which contains one or more active components.

3. Process according to claim 2, characterized in that, as the active components, there are used agrochemical active compounds, active compounds for combating pests in the domestic and public hygiene sector, pharmacological active compounds, nutrients, sweeteners, colorants, organic chemicals and/or inorganic chemicals.

4. Process according to claim 1, characterized in that the fine material escaping from the fluidized bed is continuously separated off from the off-air with the aid of a cyclone separator or dust filter and returned to the fluidized bed, or an internal return of fines is effected with the aid of a dust filter arranged above the fluidized bed.

5. Process according to claim 1, characterized in that, as the discharge point, one or more zig-zag sifters are used in which the gap length and hence the sifter cross-section is adjustable by means of bars which are connected to one another in comb-like fashion, which are adapted to the zig-zag cross-section and which are slidable perpendicularly to the axis of the sifter.

6. Process according to claim 1, characterized in that the finished granules are removed via an inflow plate which is divided into several hexagonal segments, which are each inclined towards their centre and have at that point a nozzle and, surrounding the latter, an annular gap-shaped countercurrent gravity sifter as the discharge point.

7. Apparatus for the continuous preparation of granules having a narrow particle size distribution, characterized in that the apparatus consists of a fluidized bed granulator

- which contains devices for spraying the product, which is introduced in a sprayable form, from below,
- which furthermore contains a system suitable for returning fine material escaping from the fluidized bed and
- on whose inflow plate there are arranged one or more countercurrent gravity sifters.

8. Apparatus according to claim 7, characterized in that, as the countercurrent gravity sifter, a zig-zag sifter is used.

9. Apparatus according to claim 7, characterized in that, as the countercurrent gravity sifter, there is used a zig-zag sifter in which the gap length and hence the sifter cross-section is adjustable by means of bars which are connected to one another in comblike fashion, which are adapted to the zig-zag cross-section and which are slidable perpendicularly to the axis of the sifter.

10. Apparatus according to claim 7, characterized in that, for the feeding in of the product to be granulated, there are used dual-fluid nozzles of which the atomization gas supply is designed such that, when changing nozzles during operation no air from the environment enters the granulator and no product leaves the granulator.

11. Apparatus according to claim 7, characterized in that the inflow plate is divided into several hexagonal segments, which are each inclined towards their centre and have at that point a nozzle and, surrounding the latter, an annular gap-shaped countercurrent gravity sifter as the discharge point.

## Revendications

1. Procédé pour la fabrication continue de granulés à répartition étroite des dimensions de grains, caractérisé en ce que

a)   on injecte le produit à mettre à l'état de granulés, qui est à l'état liquide, par pulvérisation de bas en haut dans un lit tourbillonnaire à l'aide d'une tuyère de pulvérisation,

b)   on sépare les fines qui s'échappent du lit tourbillonnaire avec les gaz résiduaires et on les recycle dans le lit tourbillonnaire en tant que germes de la formation des granulés,

c)   on agit sur l'opération de granulation dans le lit tourbillonnaire uniquement par réglage du courant de gaz de tamisage, de manière que les granulés se forment à la dimension déterminée par le courant de gaz de tamisage, et

d)   on prélève les granulés finis uniquement par l'intermédiaire dun ou plusieurs séparateurs à gravité et à contre-courant disposés dans le fond d'alimentation en gaz de l'appareil à lit tourbillonnaire, et

e)   on soumet le cas échéant les granulés obtenus à un traitement complémentaire thermique.

2. Procédé selon la revendication 1, caractérisé en ce que le produit à mettre à l'état de granulés est un liquide qui contient un ou plusieurs composants actifs.

3. Procédé selon la revendication 2, caractérisé en ce que les composants actifs sont des substances actives agro-chimiques, des substances actives servant à combattre les parasites au foyer et dans le domaine de l'hygiène, des substances actives pharmacologiques, des produits alimentaires, des agents édulcorants, des colorants, des produits chimiques organiques et/ou des produits chimiques inorganiques.

4. Procédé selon la revendication 1, caractérisé en ce que l'on sépare les fines qui s'échappent du lit tourbillonnaire de l'air résiduaire en continu à l'aide d'un cyclone ou d'un filtre à poussière et on les recycle dans le lit tourbillonnaire, ou bien on réalise un recyclage intérieur des fines à l'aide d'un filtre à poussières placé au-dessus du lit tourbillonnaire.

5. Procédé selon la revendication 1, caractérisé en ce que la sortie de l'appareil consiste en un ou plusieurs séparateurs en zigzag, dans lesquels la longueur de fente et, par conséquent la section des séparateurs, peut être réglée par des traverses associées entre elles en forme de peigne, adaptées au profil en zigzag et déplaçables perpendiculairement à l'axe du séparateur.

6. Procédé selon la revendication 1, caractérisé en ce que l'on évacue les granulés finis sur un fond d'alimentation en gaz subdivisé en plusieurs segments hexagonaux inclinés chacun vers son centre dans lequel il y a une tuyère et un séparateur à gravité et à contre-courant en forme de fente annulaire qui entoure la tuyère.

7. Appareillage pour la fabrication continue de granulés à répartition étroite des dimensions de grains, caractérisé en ce qu'il consiste en un granulateur à couche tourbillonnaire

- qui contient des dispositifs pour injecter de bas en haut le produit amené sous une forme pulvérisable,
- qui contient en outre un système approprié pour recyclage des fines qui s'échappent du lit tourbillonnaire et
- dans lequel on a disposé, au fond d'alimentation en gaz, un ou plusieurs séparateurs à gravité et à contre-courant.

8. Appareillage selon la revendication 7, caractérisé en ce que l'on utilise en tant que séparateur à gravité et à contre-courant un séparateur en zigzag.

9. Appareillage selon la revendication 7, caractérisé en ce que l'on utilise en tant que séparateur à gravité et à contre-courant un séparateur en zigzag dans lequel la longueur de fente, et par conséquent la section du séparateur, peut être réglée par des traverses associées entre elles en forme de peigne, adaptées au profil en zigzag et déplaçables perpendiculai rement à l'axe du séparateur.

10. Appareillage selon la revendication 7, caractérisé en ce que, pour l'alimentation du produit à mettre en granulés, on utilise des tuyères à deux substances dont l'alimentation en gaz d'atomisation est conçue de manière que, lors d'un échange de tuyère en cours de fonctionnement, l'air environnant ne puisse pas pénétrer dans le granulateur et aucun produit ne sorte du granulateur.

11. Appareillage selon la revendication 7, caractérisé en ce que le fond d'alimentation en gaz est subdivisé en plusieurs segments hexagonaux inclinés chacun vers son centre où se trouve une tuyère et un séparateur à gravité et à contre-courant en forme de fente annulaire entourant la tuyère et qui sert de sortie du produit.

FIG. 1

FIG. 2

FIG. 3

FIG. 4

FIG. 5

FIG. 6

FIG. 7

FIG. 8

FIG. 9